# EUROPEAN PATENT SPECIFICATION

(11) **EP 3 258 793 B1**
(45) Date of publication and mention of the grant of the patent: **15.05.2024**
(21) Application number: 16706742.0
(22) Date of filing: 18.02.2016
(51) Int. Cl.: A23K 20/158, A23K 40/30, A23K 50/42, A23K 50/45, A23K 10/20, A23K 50/40

(54) **CORE AND SHELL KIBBLE-LIKE PRODUCT**
TROCKENNAHRUNGSPRODUKT MIT KERN UND SCHALE
PRODUIT DE TYPE CROQUETTE COMPRENANT UN COEUR ET UNE ÉCORCE

(30) Priority: 18.02.2015 US 201562117804 P; 18.02.2015 US 201562117811 P
(43) Date of publication of application: 27.12.2017
(73) Proprietor: Mars, Incorporated, McLean, VA 22101-3883 (US)
(72) Inventor: SLUSARCZYK, Peter, McLean, Virginia 22101-3883 (US); CONYER, Sjon-Paul, McLean, Virginia 22101-3883 (US); PORTER, David, McLean, Virginia 22101-3883 (US); HARPER, Nigel, McLean, Virginia 22101-3883 (US); BUFF, Preston, McLean, Virginia 22101-3883 (US); GUMUDAVELLI, Vinod, McLean, Virginia 22101-3883 (US); TURNER, Walter, McLean, Virginia 22101-3883 (US); CHAPPELET, Laurie, McLean, Virginia 22101-3883 (US)
(74) Representative: Haseltine Lake Kempner LLP
(86) International application number: PCT/US2016/018420
(87) International publication number: WO 2016/134116

(56) References cited:
- US-A1- 2003 031 768
- US-A1- 2008 175 954
- US-A1- 2008 317 824
- US-A1- 2011 045 147
- US-A1- 2011 081 451
- US-A1- 2011 306 501

## Description

### BACKGROUND

Coatings such as gravy, flavoring agents, and supplements can be applied to dry pet food products, such as dry kibbles, to improve flavor, desirability, and/or nutrient content of the kibbles. However, such coatings are typically messy, and may require application to the dry kibble at every meal.

Wet pet food products may be desirable to pets because of their texture and flavor, but are also messy and inconvenient for the customer. These drawbacks are sufficient to prevent customers from purchasing and feeding such wet pet food products.

Dry pet food products provide benefits to consumers, such as being nutritionally complete, convenient to feed (e.g., multiple feeding occasions from a single package, shelf stable after opening), and having a less strong odor than other pet food products, such as wet pet food.

However, a potential drawback to purchasing and using dry pet food is that pets are accustomed to getting their bodily water intake from their prey, and consequently, typically drink less than the optimal amount of water when fed a dry pet food diet. This can lead to potential health problems, such as, for example, reduced activity levels, kidney stones, and disease of the lower urinary tract. Various food products are described in US 2008/317824, US 2011/081451, US2003/031768, US 2011/306501, US 2008/175954 and US 2011/045147.

### SUMMARY

The invention is defined in the attached independent claim to which reference should now be made. Further, optional features may be found in the sub-claims appended thereto.

### DETAILED DESCRIPTION

The food products of the present disclosure comprise a plurality of individual pieces, also referred to as "kibbles." Kibbles in accordance with the present invention comprise, for example, a liquid-based substance (also called a "liquid core") surrounded by an encapsulating material, the encapsulating material coated or encrusted by a solid food material coating (also called a "shell"). Herein, such a configuration is referred to as a "liquid core and shell" kibble, configuration, and/or product.

Pet food kibbles of the present disclosure comprise a solid food coating material ("shell") formulated as a dry kibble. Such a dry kibble may be advantageous because it delivers the mouth feel of both a dry kibble and liquid-based substance simultaneously with each bite. The mouth feel and/or flavor of such a combination of textures may be attractive to pets. For purposes of the present disclosure, "mouth feel" is defined as the physio-chemical interaction occurring in the mouth as perceived by the pet through mastication of the kibble. For example, mouth-feel may include attributes such as hard, soft, chewy, cohesive, dry, grainy, gummy, smooth, uniform, viscous, moist, crunchy, and combinations thereof.

Further, dry kibbles in accordance with the present disclosure may be advantageous in that that the pet owner does not have to purchase or administer a separate product, such as a gravy or liquid or semi-liquid functional agent, to the animal in addition to the liquid core and shell kibble. Stated another way, such liquid core and shell kibbles may provide benefits typically derived from a combination of a dry kibble and an additional component, such as a gravy or wet food product.

For example, a liquid core and shell kibble in accordance with the present disclosure can comprise about 27% liquid-based substance, 12% encapsulate material, and 61% solid food material coating. Further, the liquid core and shell kibble can include, for example, about 40% liquid-based substance, 20% encapsulate material, and 40% solid food material coating.

In various examples not in accordance with the invention, the solid food material coating ("shell") of the liquid core and shell kibble can comprise a semi-moist food material. The semi-moist shell can, for example, have a moisture content more than 10%, or from about 15% -50%, or further from about 12% to 40%, and yet further from about 20% to 30% moisture by weight of the semi-moist shell.

### Liquid-Based Substance

The liquid-based substances of the present disclosure can comprise, for example, water-based materials, oil-based materials, and combinations thereof. Further, the liquid-based substance can comprise an emulsion, which can be any combination of two liquids which are not soluble or miscible. The emulsion can, for example, be a combination of an oil- or lipid-based material with a water-based material. For example, the emulsion can comprise between about 10% to about 90% oil- or lipid-based material and about 90% to about 10% water-based material, and further, between about 40% to 60% oil- or lipid-based material and between about 60% to 40% water-based material.

Oil-based material within the scope of the present disclosure can include any oil suitable for consumption by the intended consumer of the pet food product. For example, the oil-based material can contain, among other oils, plant-based oils, seed oils, nut oils, butter, and animal fats. Suitable plant-based oils include, but are not limited to, coconut oil, olive oil, vegetable oil, soy oil, canola oil, palm oil, rice bran oil, avocado oil, and combinations thereof. Suitable seed oils include, but are not limited to, flax-seed oil, cottonseed oil, rapeseed oil, sunflower seed oil, and combinations thereof. Suitable nut oils include, but are not limited to, peanut oil, almond oil, pecan oil, walnut oil, cashew oil, and combinations thereof. Suitable animal fats include, but are not limited to, fish oil and other animal fats.

A suitable oil-based material can comprise a low viscosity, such as a viscosity between about 1 cp and about 2,000 cp, and further, in the ranges of between about 10-500, about 10-100, about 100-300, about 300-500, about 500-2,000, about 100-800, about 50, about 100, about 200, about 300, about 400, about 500, about 600, about 800, about 1000, about 1,200, about 1,500, and about 1,800 cp. As a non-limiting example, sunflower seed oil has a viscosity of about 10 cp and rapeseed oil has a viscosity of about 98 cp. The viscosity of the oil-based material can change depending on the functional or active ingredients, agents, and/or organoleptic enhancers that are present within the core.

Further, the oil-based material of the liquid core can be protected from oxidation, thus preserving the oil-based substance. The oil-based material can be preserved for at least 12 months, at least 15 months, at least 18 months, at least 21 months, at least 24 months, at least 27 months, at least 30 months, at least 33 months, or for at least 36 months. This also controls the amount of oil that leaches or becomes rancid within the product.

Suitable functional ingredients can include, for example, ingredients with a low flash point or smoke point. Ingredients with low flash or smoke points may smoke or create a flame at a low temperature such as, for example, below 120°C. Such ingredients can include, but are not limited to, hydrocarbons, carbonyls, aldehydes, ketones, acids, esters, lactones, bases, sulfur compounds, acetals, ethers, halogens, nitriles and amides, phenyls, furans, oxides, pyrans, coumarins, oxazoles, anhydrides, phthalides, and combinations thereof. These ingredients are frequently utilized in the manufacture of ingredients that provides scent, flavor, or nutritional benefits. Such ingredients can, for example, be present in the product of the present application in an amount of less than 2% by weight.

In various embodiments, the liquid-based substance can comprise one or more functional ingredients and/or organoleptic enhancers. Suitable functional ingredient and/or organoleptic enhancer can comprise, for example, about 1% to 10% by weight of the liquid core and shell, where values such as, but not limited to, 1% to 5%, 1% to 3%, 2%, 4%, 6%, 7%, 8%, and 9% are envisioned. The amount of the functional ingredients and/or organoleptic enhancers can change depending on the intended recipient and the type of functional ingredients and/or organoleptic enhancers used. As a non-limiting example, some functional ingredients and/or organoleptic enhancers may have higher potency than others, therefore a high potency ingredient would be used in a smaller amount.

Further, suitable functional ingredients and/or organoleptic enhancers can include ingredients that are oxygen sensitive. Oxygen sensitivity can be measured using the redox potential of the ingredient. Alternatively, the oxygen sensitivity can be measured using the Oxygen Bomb test, PV (a measure of power applied per unit area), the number of aldehydes present, and combinations thereof. Oxygen sensitive ingredients include, but are not limited to, vitamin B6 (min 1 mg/kg), vitamin C, vitamin E (50- 1000 IU/kg), linoleic acid (min 1%), and folate. These oxygen sensitive ingredients could be utilized in the liquid core or in the encapsulate material, and can be present in, for example, an amount of less than about 1.5% by weight. For example, an oxygen sensitive ingredient can be an oil contained within the core of the liquid core and shell product. Such an oil can, for example, comprise up 85% to 100% by weight of the liquid core.

Functional ingredients and/or organoleptic enhancers can include ingredients that are light sensitive. Light sensitive ingredients include, but are not limited to, vitamin A (5000-250,000 lU/kg), vitamin B12 (min 0.022 mg/kg), vitamin D (50-5000 IU/kg), vitamin E (50-1000 lU/kg), pyridoxine (min 1 mg/kg), riboflavin (min 2.2 mg/kg), and linoleic acid (min 1%). Light sensitivity can be determined through shelf life testing using a light box, as is known in the art. Light sensitive ingredients can be present in the liquid core and shell product of the present disclosure in, for example, an amount of about less than 1% by weight of the product.

Suitable functional agents can also include agents that provide a dietary advantage when consumed. For example, functional agents and/or organoleptic enhancers can include vitamins, nutritional supplements, dental preparations, medications, and pharmaceutical
preparations. Nutritional supplements can include, for example, any supplement that benefits the intended consumer of the liquid core and shell product, including, but not limited to, macronutrient, phytonutrient, vitamin, herbal, and mineral supplements. Vitamins can, for example, include any vitamin that can be delivered by an oil-based carrier, including, but not limited to Vitamin A, B, C, D, E, and combinations thereof. In embodiments in which the liquid core and shell product is formulated for human consumption, functional ingredients and/or organoleptic enhancers can be selected from, but are not limited to, antioxidants, vitamin A, vitamin B, vitamin B6, caffeine, fish oil, vitamin B12, vitamin C, vitamin D, calcium, chondroitin, folic acid, cranberry, probiotics, and combinations thereof. In an embodiment in which liquid core and shell product is formulated for animal consumption, functional ingredients and/or organoleptic enhancers can be selected from, but are not limited to, glucosamine, chondroitin, MSM, green-lipped mussel extract, fish oil, probiotics, multivitamins, lysine, milk thistle, S-adenosyl methionine, (SAM-e), digestive enzymes, coenzyme Q10, azodyl, and combinations thereof.

Suitable functional ingredients and/or organoleptic enhancers can further include a prebiotic, a probiotic, or a combination of both. Probiotic ingredients can include, but are not limited to, *Lactobacilli, Bifidobacteria,* including *Bifidobacterium animalis, Enterococci* bacteria and combinations thereof. Probiotics are bacteria which ferment a substrate to create an environment which is less favorable to pathogenic bacteria, thus reducing the population of pathogenic bacteria. Prebiotics can include, but are not limited to, Fructooligosaccharide, Galactooligosaccharide, Mannan Oligosaccharides, Inulin, resistant starch, lactulose, and combinations thereof. Prebiotics are fermentable fibers which pass through the digestive system into the hindgut to provide substrate for probiotic bacteria. Prebiotics can, for example, be located in the solid-based material of the product. Probiotics can, for example, be included in the liquid core of the product.

Further, functional ingredients can be utilized to improve the bad taste or aroma of one or more other ingredients in a food composition. Such ingredients include, but are not limited to psyllium, magnesium and iron.

The liquid core may further comprise ingredients intended to improve oral care, such as, for example, essential oils, anti-microbial agents, breath freshening agents, and combinations thereof. Further, oral care ingredients can include, but are not limited to, agar oil, ajwain oil, angelica root oil, anise oil, asafetida, balsam of peru, basil oil, bay oil, bergamot oil, black pepper oil, buchu oil, birch, camphor, cannabis flower essential oil, caraway oil, cardamom seed oil, carrot seed oil, cedarwood oil, chamomile oil, calamus root, cinnamon oil, cistus, citronella oil, lemongrass oil, clary sage, clove leaf oil, coffee, coriander, costmary oil, costus root, cranberry seed oil, cubeb, cumin oil/black seed oil, cypress, cypriol, curry leaf, davana oil, dill oil, elecampane, eucalyptus oil, fennel seed oil, fenugreek oil, fir, frankincense oil, galangal, galbanum, geranium oil, ginger oil, goldenrod, grapefruit oil, limonene, henna oil, helichrysum, hickory nut oil, horseradish oil, hyssop, Idaho tansy, jasmine oil, juniper berry oil, laurus nobilis, lavender oil, ledum, lemon oil, lemongrass, lime, litsea cubeba oil, linaloe, mandarin, marjoram, melaleuca, Melissa oil, menthe arvensis oil, mountain savory, mugwort oil, mustard oil, myrrh oil, myrtle, neem oil, neroli, nutmeg, orange oil, lemon oil, oregano oil, orris oil, palo santo, parsley oil, patchouli oil, perilla, pennyroyal oil, peppermint oil, petitgrain, pine oil, ravensara, red cedar, roman chamomile, rose oil, rosehip oil, rosemary oil, rosewood oil, sage oil, star anise oil, sandalwood oil, sassafras oil, savory oil, schisandra oil, spearmint oil, spikenard, spruce, tangerine, tarragon oil, tea tree oil, thyme oil, tsuga, turmeric, valerian, vetiver oil, western red cedar, wintergreen, yarrow oil, ylang-ylang, zedoary oil, and combinations thereof. Oral care ingredients can, for example, be present in an amount of from about 0.001% to 10% by weight, were values such as 0.1% to 2%, 0.005% to 2%, 1% to 5%, 1% to 10%. 0.001% to 0.1% (by weight of the liquid core and shell product) and values in-between are envisioned. Such oral care liquid core and shell products can be formulated for the intended consumer.

In various embodiments, the intended consumer is a feline or canine. In such embodiments, suitable oral care ingredients include, but are not limited to, sodium hexametaphosphate, sodium tripolyphosphate, sodium metaphosphate, sodium trimetaphosphate, L-ascopic acid 2-monophosphate, zinc sulfate, malic acid, chlorhexidine, green tea extract, tea tree oil, essential oils, and combinations thereof. In embodiments in which sodium hexametaphosphate is used, it is preferably included in an amount of from about 0.5% to 2.5% by weight. For example, sodium tripolyphosphate can be included in an amount of from about 0.2% to 2.0% by weight. Sodium metaphosphate can, for example, be included in an amount of from about 0.2% to 2.0% by weight. Sodium trimetaphosphate can, for example, be included in an amount of from about 0.4% to 2.0% by weight. C 50-L-ascorbic acid-2-monophosphate can, for example, be included in an amount of from about 0.1% to 1.0% by weight. Zinc sulfate can, for example, be included in an amount of from about 0.01% to 0.1% by weight. Malic acid can, for example, be included in an amount of from about 0.25% to 2.0% by weight. Chlorhexidine can, for example, be included in an amount of from
about 0.5% to 2.0% by weight. Green tea can, for example, be included in an amount of from about 0.5% to 0.15% by weight. Tea tree oil can, for example, be included in an amount of from about 0.008% to 0.08% by weight.

Further, the liquid core can include one or more palatants, flavorings, and/or scents. For example, the liquid core can comprise meat flavoring, smoky aroma or palatant, gravy, peanut butter, almond butter, fruit flavorings, vegetable flavorings, mint, and combinations thereof. The palatant, flavoring, and/or scent may provide an enhanced organoleptic experience for the recipient, as the palatant, flavoring, and/or scent is protected within the liquid core such that the pet experiences a more intense flavor and/or scent than the organoleptic enhancer would provide were it not protected and/or preserved within the liquid core.

The liquid-based substance can, for example, be heat stable, such that the center of the liquid core and shell product maintains its shape when exposed to heat. Further, the heat stable center can be stable at room temperature, which may increase the shelf life of the product and provide for easier storage by the customer.

In various embodiments, antioxidant compositions can be added to the liquid core, the shell, or both. In embodiments in which antioxidants are added to the shell, the amount of antioxidant compositions required to reduce oxidation of the liquid core would be less when compared to commercially available kibble products utilizing antioxidants only within the liquid core. Anti-oxidant compositions can be any compositions known in the art to possess anti-oxidant properties suitable for consumption by the intended recipient. Antioxidants can, for example, be provided in an amount of about 150 ppm to 5ppm, where values such as 6, 7, 8, 9, 10, 20, 30, 40, 50, 60, 70, 80, 90, 100, 110, 120, 130, 140, 20-90, 10-50, 10-100, 30-120, and all values there between are envisioned. The amount of antioxidant can depend on the fat content of the product. Antioxidants can be selected, for example, from BHT, BHA, and combinations thereof. In embodiments in which the liquid is an oil, antioxidants may control the amount of oil that leaches or becomes rancid in the product.

In a further embodiment, the liquid core and shell product can include a humectant. The humectant can include, but is not limited to, salt, glycerol, sugar, and gum. For example, the humectant can be glycerol.

### Encapsulate Material

Pet food products in accordance with the present disclosure comprise an encapsulate material surrounding the liquid-based substance. The encapsulate material can, for example, encapsulate and protect the liquid-based substance. For example, the encapsulate material can protect the liquid-based substance (such as, for example, an oil-based material), from degradation, leaching, and/or becoming rancid, a problem seen in the industry with regard to carbohydrate products coated with oil-based materials.

The encapsulate material can comprise, for example, a hydrophilic matrix, a hydrophobic matrix, gelatin, tapioca, alginates, divalent cation set alginates, protein or hydrocolloid-based film, and combinations thereof. Suitable gelatin materials can comprise, for example, those having a gelatin bloom strength between about 100-500 bloom, between about 200-250 bloom, about 100 bloom, about 120 bloom, about 150 bloom, about 200 bloom, about 250 bloom, about 300 bloom, about 350 bloom, about 400 bloom, about 450 bloom, about 500 bloom, and any amount there between. Further, the physical characteristics of a gelatin encapsulate material may be driven by a level of Aw (water activity) equilibrium of the entire system, which may preferably be in a range of about 0.3- 0.75.

The encapsulate material surrounding the liquid core of the product can comprise a water impermeable material. For example, the encapsulate material can comprise a wax. Wax materials suitable for use include, but are not limited to, paraffin wax, bees wax, candelilla, carnauba, shellac, animal fats, and composites of wax and suitable materials such as cellulose ethers, e.g. a wax methylcellulose composite. However, any material capable of encapsulating a liquid-based substance and preserving the liquid-based substance suitable as safe for consumption is within the scope of the present disclosure.

In various embodiments, the liquid-based substance is encapsulated using a soft gel encapsulation process. In such embodiments, the encapsulate material can comprise protein, humectant, and water. A method for surrounding a liquid-based substance within a soft gel encapsulate material can comprise mixing an encapsulate material, forming a sheet of encapsulate material, forming a capsule from the sheet of encapsulate material, and depositing a liquid-based substance into the capsule. Further, the method can comprise mixing protein, humectants, and water, cooking the mixture, and conditioning the cooked mixture to develop a pumpable protein-based slurry. The slurry can be deposited on a set of chilled rollers and converted into two streams of continuous sheets of soft film. Both streams of film can be fed in between two forming rollers with machined symmetrical forming cavities. The liquid-based substance can then be deposited into each capsule as the two sheets of film are pressed together by forming rollers. Once the capsules are fully formed and sealed, the finished
product of liquid-based substance fully encapsulated in protein based soft film is released from the cavities of the forming rollers for post forming processing. The remaining web is then removed.

The encapsulate material can also comprise a preformed capsule. For example, a suitable preformed capsule can comprise a one piece capsule or a two piece capsule. In embodiments in which the encapsulate material is a gel capsule (either preformed or formed around the liquid core as described above), the capsule can be sized so that the final liquid core and shell product is bite-sized for the intended pet, taking into consideration gape, bite force, jaw size, and the like. For example, the capsule can have a diameter of between about 1-10mm, where values such as 4-8mm, 5-8mm, 5 mm, 6mm, 7mm, 8mm, and 9mm are envisioned. The thickness of the water impermeable encapsulate material can be between about 0.1-1.0mm, between about 0.2-0.7mm, and between about 0.3-0.5mm thick.

The encapsulate material can be in any state capable of surrounding a liquid-based substance such that little to no oxygen reaches the liquid-based substance. Such states include, but are not limited to, solid, gel, semi-solid, and thick liquid. Additionally, the encapsulate material can be mixed with chunks of other food products, such as, but not limited, to meat products.

Multiple different types of encapsulate materials can be used together in connection with the same liquid core and shell product of the present disclosure. In such embodiments, each different type of encapsulate material can have a different function such that when the functions are combined, a desired and/or predetermined effect is generated. For example, a first encapsulate material can include a highly aromatic compound that quickly dissipates to entice a pet, while a second encapsulate material can comprise an active ingredient which, for example, supports dental health (e.g., sodium tri-polyphosphate). In another example, the use of two different flavored encapsulate materials can generate variety or create a more refined/complex aroma/flavor experience (e.g., more meal-like). In a further example, a first encapsulate material can include an ingredient which begins a reaction (e.g., an enzyme that breaks down proteins for digestion) and a second encapsulate material can include an ingredient which stops a reaction (e.g., an ingredient which breaks down the digestion enzyme and is in a slow release form). Such a configuration may, for example, assist in delivering a desired level of digestibility. Other potential encapsulate material combinations can include, for example, a fast release encapsulate material and a slow release encapsulate material (where the fast release encapsulate material brings one smell and/or taste and the slow release encapsulate material morphs the smell and/or taste).

For example, the encapsulate material can comprise between about 5% to 30% by weight of the liquid core and shell product by weight, where values such as 0.1% to 20%, 1% to 30%, 5% to 10%, and 8% by weight, as well as each discreet amount, 0.5, 0.8, 1, 2, 3, 4, 5, 6, 7, 8, 9, 10, 11, 12, 13, 14, 15, 16, 17, 18, 19, 20, 21, 22, 23, 24, 25, 26, 27, 28, 29, and 30% by weight as well as each range there between is envisioned.

Functional ingredients within the liquid core can, for example, carry with them unwanted and undesirable aromas and/or flavors. These flavors can be masked by a portion of the encapsulate material that is designed to overpower, subdue, or capture the aroma or flavor. In one such example, the flavor is that of green-lip muscle and it is sequestered by an aroma enhancer/masking agent such as those known in the industry, such as, but not limited to those produced by Flavor House (Adelanto, Canada). In another example, the unsavory aroma is fish oil which is only unsavory to the pet owner serving the food product. In this instance, the encapsulate material includes a volatile aromatic. Examples of suitable volatile aromatics are phenolics, benzoic acid, and vanillin produced by Sensient (Milwaukee, WI) or MANE (France). The effect of such encapsulate materials is greatest at the initial breaking of the product so that consumers do not smell the functional ingredient, e.g., fish oil, but the dog or cat is able to smell it upon consumption. In another example, the unwanted aroma or flavor is simply bland and the use of encapsulate materials can provide a flavor/aroma spike that can enhance the consuming experience for both the consumer and pet. In another example, the negative aroma/flavor is produced by the addition of psyllium or oligosaccharides and is managed via methods included above. Preferably, the flavoring is included in the product of the present application in an amount of about 1% to 10% by weight, where values such as 2%, 3%, 4%, 5%, 6%, 7%, 8%, 9%, 2-5%, 4-8%, and 3-9% by weight are envisioned. Where scents are used to mask unwanted aromas, these are present in amounts from about 1-5% by weight of the product. Some examples of scent ingredients are smoke oil and meat scents, such as, but not limited to, chicken, beef, duck, seafood, pork, and combinations thereof.

### Solid Material Coating

Pet food products in accordance with the present comprise a liquid-based substance coated by an encapsulated material, which is in turn coated or encrusted in a solid food material. The solid food material (also referred to as the "shell"), can comprise any solid food material suitable for a pet, where the solid food material may be completely solid, soft, or semi-solid. For purposes of the present disclosure, "solid food" material or product refers to completely solid, granular, semi-solid, hard, and soft food products. The solid food material is preferably selected from, but not limited to, a carbohydrate-based product, a protein-based product, and combinations thereof. Carbohydrate sources include any carbohydrate suitable for consumption by the intended consumer of the liquid core and shell product, including but are not limited to, wheat, oats, grains, seeds, grass, barley, millet, corn, potato, and starchy-vegetables. The carbohydrate source can be combined, for example, with other ingredients typically used in animal food products in order to create a dry carbohydrate that can be used as a coating for purposes of the present application. In further embodiments, the solid food material comprises a dry pet food material. Any suitable dry pet food material can be used.

For example, the liquid core can comprise high levels of moisture, and the surrounding solid food material can contain less than 10% by weight moisture, or less than 9% by weight. Such a configuration can produce a pet food product which may be transported and stored under normal conditions, yet is capable of providing hydration to pets. For the purposes of this disclosure, the term "dry" corresponds with a material containing about 12% or less moisture by weight.

Further, the solid food material can comprise between about 10% and 50% by weight of the liquid core and shell product, and further between about 15% and about 30% by weight of the liquid core and shell product.

In various embodiments, the solid food material is mixed with other ingredients such as, for example, fats, oils, eggs, sugar, meat products, leavening agents, spices, flavorings, and combinations thereof. For example, the solid food material can comprise a combination of a carbohydrate mixed with other ingredients to form a carbohydrate-based food product. Examples of such carbohydrate-based food products suitable for human consumption include, but are not limited to, cereal, pretzel, puffed rice, puffed corn, chips, crackers, granola, oatmeal, cornmeal, and combinations thereof. Examples of such carbohydrate-based food products suitable for animal consumption, include, but are not limited to, kibble, treat, chews, dental treats, biscuits, and combinations thereof.

Further, the solid food material can have, for example, a water activity level of about 0.75 or less, where values such as, but not limited to, a range of 0.25 - 0.75, 0.3 - 0.6, 0.4 - 0.5, 0.3-0.75, 0.55, and ranges there between are contemplated. Such water activity levels may provide, for example, a crunchy sensation and/or sound in the mouth when consumed. The solid food material can be combined with other ingredient typically used in food products in order to create a dry carbohydrate that can be used as a coating. The moisture level for solid food materials of the present disclosure is less than 10%, where values such as 5-10%, 6%, 7%, 8%, 9%, and values in between are envisioned.

The solid food material can comprise, for example, about 2-10% fiber by weight, 4-10% moisture by weight, 5%-30% fat by weight, and 18-60% protein by weight. The fiber component can be included in an amount of about 2%, 3%, 4%, 5%, 6%, 7%, 8%, 9%, 10%, 3-5%, 4-8%, 3-9% by weight, and all values there between. The fat component can be included in an amount of about 5%, 6%, 7%, 8%, 9%, 10%, 12%, 15%, 18%, 20%, 22%, 25%, 30%, 5-10%, 10-20%, 10-30%, 20-30% by weight, and all values there between. The protein component can be included in an amount of about 18%, 20%, 22%, 25%, 30%, 32%, 35%, 38%, 40%, 42%, 45%, 48%, 50%, 52%, 55%, 60%, 18-30%, 20-30% by weight, and all values there between.

Any method for providing a solid food material for coating or encrusting of the encapsulate material is within the scope of the present disclosure. For example, the solid food material can be produced by obtaining a solid food product (such as a dry dog food), reducing the size of the solid food product into small pieces of solid food material, and spraying the pieces of solid food material onto the encapsulate material coated liquid-based substance. Another example of a method of producing a solid food material includes reducing the size of the solid food material into small pieces, placing a binder composition onto the encapsulate material coated liquid-based substance, and rolling or shaking the encapsulated liquid-based substance in the small pieces of the solid food material such that the pieces adhere to the binder, creating a coating and/or encrusting the encapsulate material coated liquid-based substance with the solid food product. In yet a further non-limiting example, a solid food material is shaped into a hollow form, such that an encapsulate layer and liquid-based substance can be injected into the center of the solid food material. The solid food material, for purposes of the present disclosure, can be solid or semi-solid, where the solid food material ranges from very soft to hard. In another embodiment, the carbohydrate-based material can be place onto the encapsulate material using panning.

In some forms, the solid food material surrounds from about 1% to 100% by weight of the encapsulate material and the liquid core, where ranges such as 2% -50%, 5%-75%, 10% to 80%, 15% to 90%, 20% to 100%, 40% - 80%, 50% to 100% by weight and envisioned, and particular values such as, but not limited to, 50%, 55%, 60%, 65%, 70%, 75%, 80%, 85%, 90%, 95%, 96%, 97%, 98%, 99%, or 100% by weight are envisioned.

In other embodiments, the solid food product, or mixture including a solid food product, is cooked, baked, fried, extruded, or processed prior to being used in the liquid core and shell product of the present application. The solid food product can be oven baked, fried in oil, or extruded; however, the disclosure is not limited to these embodiments.

In accordance with the present disclosure, an intensely flavored element or topper can be utilized in the liquid core, shell, or as a coating over the shell. Such flavors can include, for example, meat flavorings, seafood flavorings, fruits and fruit extracts, natural flavorings, and synthetic flavorings. Flavors can be present in products of the present disclosure from about 0.02% to 1.0%.

Liquid core and shell products in accordance with the present disclosure can be coated or encrusted in a wet-based product comprising a solid food material. In such embodiments, the solid food material comprises carbohydrate, protein, or combinations thereof. The wet-based product used for encrusting or coating can also be a semi-moist solid food material. In an embodiment where the solid food material is either wet or semi-moist, the moisture content of the solid food material is more than 10%, preferably from about 15% -50%, from about 12% to 40%, and further, from about 10% to 15%.

### Methods of Making Food Products

The present disclosure provides a number of methods (not in accordance with the invention) of making liquid core and shell products comprising a liquid core, an encapsulate material, and a solid food material coating. For example, one method comprises obtaining a liquid-based substance that is contained within an encapsulate material and coating the encapsulate material with a solid food material. The method can further comprise breaking a solid food material into smaller pieces and coating the encapsulated liquid-based substance with pieces of the solid food product. The solid food product can be baked, cooked, or fried breaking into smaller pieces, although this is not required. For example, the solid food material can be cooked under temperature and pressure conditions, such as in an extruder, prior to coating the encapsulated liquid-based substance.

A method for forming a liquid core and shell product wherein the liquid core is an oil-based material and the shell is a carbohydrate-based material can include obtaining a hydrophilic matrix (e.g., a gelatin-coated oil-based product) and coating it in a carbohydrate and protein-based product. The method can further include breaking a carbohydrate-based product into smaller pieces and coating the gelatin coated oil-based product with the pieces of the carbohydrate-based product. The carbohydrate-based product can be baked, cooked, or fried prior to being broken into smaller pieces, although this is not required. For example, the carbohydrate-based product can be cooked under temperature and pressure conditions, such as in an extruder, prior to being used to coat the gelatin coated oil-based product.

Coating the encapsulated liquid-based substance can, for example, include pulverizing a solid food material and spraying it onto the surface of the encapsulated liquid-based substance. The spray can, for example, comprise pulverized kibble or cereal in combination with a tacky material, such as, but not limited to, gelatin, molasses, honey, and similar materials, or, alternatively, may simply be a water solution. The solid food material (e.g., pulverized kibble or cereal) can have a wide solids content range of about 10%-80% by weight, depending on the application methodology. The solid material can be sprayed, applied via automatic brush dispensing, printed, enrobed, or any combination thereof.

The resulting liquid-based substance inside the encapsulate material (e.g., gelatin or otherwise) with the outer solid food material coating can be dried to a final external moisture. Methods of drying would be commensurate with maintaining the encapsulate material and would thus normally require lower temperatures. This can be achieved using super-heated steam, vacuum driers, or a gentle heating profile.

Another method of making a liquid core and shell food product not in accordance with the invention comprises obtaining a liquid-based substance coated in an encapsulate material and coating or encrusting it with a solid food material. The method can additionally include the step of reducing the size of the solid food material by, for example, smashing, grinding, milling, chopping, breaking, and combinations thereof. Further, the method can includes adhering the pieces of solid food material to the encapsulate layer of the liquid core and shell product by, for example, spray drying, rolling, panning, shaking, baking, and combinations thereof. In some embodiments, the method includes applying a binder material to the encapsulate material prior to adhering the pieces of the solid food material to the encapsulate material. Moisture can be added to the layer of encapsulate material prior to adhering the pieces of solid food material to the layer of encapsulate material.

A further method of making a liquid core and shell food product not in accordance with the invention can comprise obtaining an encapsulate material, preferably a protein- or gelatin-based material, forming it into a capsule, filling it with a liquid-based substance, and coating the capsule containing the liquid-based substance with a solid food material. The method can further include cooking or baking the solid food material prior to using it as a coating. Further, the solid food material can be broken into smaller pieces prior to using it as a coating. The capsule formed by the encapsulate material can be, for example, a rigid two piece capsule or a soft one piece capsule. A rigid two piece capsule can, for example, be filled with the liquid-based substance, followed by placing the second piece of the capsule securely onto the first piece of the capsule. A soft one piece capsule can, for example, be injected with the liquid-based substance and sealed.

Yet another method of making a liquid core and shell food product not in accordance with the invention comprises forming a hollow product of solid food material or providing a preformed hollow product of solid food material and filling it with an encapsulate material and a liquid-based substance, such that the liquid-based substance is surrounded by the encapsulate material. The method can also include closing the hollow solid food material after it is filled and/or baking the solid food material after it is filled with an encapsulate material and a liquid-based substance.

In a further embodiment, a pocket made of a solid-based material is created and then filled with a capsule (acting as the encapsulate material) containing a liquid core comprising a hydrating material. Once the capsule containing the hydrating material is placed in the pocket, the pocket can be sealed or closed such that the capsule is minimally exposed or not exposed. In a further embodiment, the capsules filled with the hydrating material are mixed with conventional food products, such as cereal or kibble. In such an embodiment, a further coating may be present on the outside of the capsule.

A liquid core and shell food product that is capable of being heated such that the liquid-core becomes warm without compromising the carbohydrate product that is coating or encrusting the liquid-core can be formed in accordance with the present disclosure. For example, a liquid core and shell food product having a warm liquid core can be formed by obtaining the liquid core and shell product of the present application and warming it. Further, the warmed liquid core and shell product can be provided to an animal in need thereof. In such an embodiment, the liquid-core can include animal products and/or a gravy substance.

The liquid core and shell product of the present disclosure can be any size and shape capable of having a liquid core. Suitable shapes can include, but are not limited to, sphere, prism, cube, rectangular box, triangular, star, round, irregular, ellipse, and the like. The shape may also have an irregular texture and/or multiple textures on the surface of the product. Further, the liquid core and shell product can be bite-sized for the intended consumer (e.g., dog or cat). The bite size of the intended consumer can be determined based on a variety of factors including, but not limited to, size, jaw size, bite, gape, and combinations thereof.

Liquid core and shell products of the present disclosure can, for example, comprise a radius of about 5 mm to about 25mm, and further, a radius of about 10mm to 20mm.

A pet food kibble in accordance with the present disclosure can be used as a delivery system configured to deliver one or more functional ingredients within the liquid-based substance and/or the solid food material coating of the kibble. As previously described, suitable functional ingredients can include, for example, prebiotics, probiotics, weight and energy management supplements, oral care ingredients, immunity boosting ingredients, ingredients benefiting brain development, ocular care ingredients, ingredients benefiting skin and coat or hair, or combinations thereof.

In a preferred embodiment where the liquid core is oil, the fat content of the product is at least 20%, at least 30%, at least 40%, at least 50%, at least 60%, at least 70%, or at least 80%, by weight of the product. Amounts of 25%, 30%, 35%, 40%, 45%, 50%, 55%, 60%, 65%, 70%, 75%, 85% and 95% by weight of the product are envisioned. The fat content of the liquid core and shell product can be adjusted depending on the recipient, the functional agent and/or organoleptic enhancer included. Further, the fat content can be adjusted depending on the nutritional needs of the recipient.

In various embodiments, the liquid core and shell product has an extremely volatile content. The volatile content represents a vapor pressure of below 10mmHg. Such volatile materials include, but are not limited to, oils, flavoring agents, and heat sensitive materials. These materials are highly volatile, where volatility of a material is determined by its vapor pressure at process temperature. Another important parameter is ignition temperature. Many products have an extremely high vapor pressure at conditions of extrusion. They will flash off aggressively leaving only a small amount of their initial concentration. By including these volatile materials in the product of the present application instead of processing through an extruder, the material does not flash off and is stronger in usage.

In another embodiment of the present application, the liquid core and shell product maintains equilibrium between the oil and gelatin portions and the moisture in the kibble. Preferably, the equilibrium between the oil, gelatin, and carbohydrate-based material is preferably about 0.30 to 0.75.

The present disclosure also provides for an internal palatant delivery. For example, a method for internal palatant delivery (not in accordance with the invention) comprises administering the liquid core and shell product of the present application to a recipient in need thereof. The recipient can be a human or an animal. The internal palatant is can be selected from, but is not limited to, scents, flavoring agents, and other agents having an appealing taste. The palatant can be delivered via the liquid core of the product, such that when the recipient bites into the product, the palatant is released. Preferably, the recipient enjoys the palatant and wants to consume more of the product. In various embodiments, the liquid core and shell product has an increased palatability when compared with commercially available kibble.

In various embodiments, the liquid core and shell product can be configured to treat or prevent dehydration in a pet. For example, dehydration can be lessened in severity in at least 10%, at least 20%, at least 30%, at least 40%, at least 50%, at least 60%, and at least 70%, 80%, 90% and 100% of the animals consuming the product (measured by the intake of water for the animal in a day and in comparison to animals having food and water fed ad libitum). Alternatively, an animal consuming a product of the disclosure can have hydration levels that are at least 10%, at least 20%, 30%, 40%, 50%, or higher, or at least 10%, at least 20%, 30%, 40%, 50% or closer to desired hydration levels than animals not fed the product, but having food and water fed ad libitum. Dehydration and hydration are preferably diagnosed through blood, urine, and fecal samples. Once dehydration is diagnosed, lab testing is completed to determine the level of dehydration. Certain skin elasticity measurements can also be used to determine if an animal is dehydrated.

### EXAMPLES

### Example 1

This example describes one method of coating or encrusting a gelatin coated oil-based material.

### Materials and Methods

A gelatin capsule will be filled with an oil-based substance was obtained, where the oil-based substance will contain an oral care supplement for cats. A dry cat kibble will also be obtained. The dry cat kibble will have a moisture content of less than 10%. The dry cat kibble will be ground into small pieces. The dry kibble will have the following general composition:

| | Full Range Cat | More Typical Range Cat | Dog | More Typical Range Dog |
|---|---|---|---|---|
| Protein | 60-28% | 45-28% | 45-18% | 35-18% |
| Fat | 30-9% | 22-9% | 22-5% | 15-8% |
| Moisture | 15-4% | 15-7% | 15-6.5% | 15-6.5% |
| Fiber | 10-2% | 7.5-2% | 6.5-2% | 6.5-3% |

The gelatin capsule will then be moistened and placed into a plastic container full of the dry cat kibble pieces. The container will then be shaken such that the pieces of dry kibble will adhere to the gelatin capsule. The coated gelatin capsule will then be dried creating an oil-core carbohydrate product. The oil-core carbohydrate product will then be fed to cats.

### Results and Conclusions

The cats will consume the oil-core carbohydrate product. The oil-based product will be delivered to the cat's mouth with each bite, creating very little, if any mess. Cats will be attracted to the food and visit the food bowl multiple times to consume the oil-core carbohydrate product.

### Example 2

This example describes one method of coating or encrusting a gelatin coated oil-based material.

### Materials and Methods

In a perforated coating drum maintained at a temperature no greater than 28° C., shellac was atomized (50 psi pump, 50 psi spray pattern (Spray Dynamics)) onto gelatin capsules containing an oil-based substance to pre-treat the surface; the rotational speed was high (14 rpm), and no air flow was maintained. After allowing the shellac to roll-in for five minutes, the shellac-coated capsules were dried for ten minutes under a moderate air flow (27° C.; dryness=2.0 g moisture/kg air), while a low rotational speed was maintained (7 rpm). Then, the coated capsules were coated with the adhesive binder, while maintaining a high rotational speed (14 rpm) and no air flow for five minutes; the gelatin capsules were tumbled to facilitate coating. Next, pieces of a carbohydrate product were added to the tumbling mass of binder-coated gelatin capsules. As the carbohydrate product pieces will be added, the rotational speed will be systematically reduced to begin the adhering process (from 14 rpm to 10 rpm to 4 rpm to 2 rpm over the course of 5 minutes). Next, the binder will be dried under a high speed air flow (400 CFM; 27° C.) for 15 minutes. During drying, a low rotational speed will be maintained (2 rpm), and horizontal mixing bars and slow tumbling will be used to prevent clustering. Then, a dextrin film will be formed over the coated product under an air flow (200 CFM; 27° C.) and with a medium rotational speed (4 rpm) for three minutes. Finally, the coated capsules having pieces of a carbohydrate product adhered thereto will be
dried under a medium speed air flow (200 CFM; 27° C.) and with a low rotational speed (2 rpm) for 5 minutes.

### Results and Conclusions

The resulting product will be an oil-core carbohydrate product where the oil is protected from oxidation and the overall product having a crunchy outer shell with a unique mouth feel.

## Claims

1. A food product comprising a plurality of individual pieces, wherein each piece comprises:
a. a capsule comprising an encapsulate material surrounding a liquid-based substance; and
b. a coating comprising a dry solid food material surrounding at least a portion of the encapsulate material; wherein the food product is **characterised in that**:
each capsule is individually coated by the dry solid-food material; and
the dry solid food material comprises pet food kibble having a moisture content of less than 10%.

2. The food product of claim 1, wherein the liquid-based substance further comprises at least one of a functional ingredient and an organoleptic enhancer.

3. The food product of claim 1, wherein the liquid-based substance is selected from the group consisting of oil and water.

4. The food product of claim 1, wherein the liquid-based substance has a viscosity of from 0.8 cp to 2,000 cp.

5. The food product of claim 1, wherein the encapsulate material is selected from the group consisting of a hydrophilic matrix, a hydrophobic matrix, gelatin, a divalent cation set alginate, a protein based film, and a hydrocolloid based film.

6. The food product of claim 1, wherein the encapsulate material is selected from the group consisting of a divalent cation set alginate, paraffin wax, bees wax, candelilla, carnauba, shellac, animal fats, tapioca, and combinations thereof.

7. The food product of claim 1, wherein the liquid-based substance is water.

## Patentansprüche

1. Nahrungsmittelprodukt umfassend eine Vielzahl von einzelnen Stücken, wobei jedes Stück umfasst:
a. eine Kapsel umfassend ein Verkapselungsmaterial, die einen Stoff auf flüssiger Basis umgibt; und
b. einen Überzug umfassend ein trockenes festes Nahrungsmittelmaterial, der wenigstens einen Teil des Verkapselungsmaterials umgibt; wobei das Nahrungsmittelprodukt **dadurch gekennzeichnet ist, dass**:
jede Kapsel einzeln mit dem trockenen festen Nahrungsmittelmaterial überzogen ist; und
das trockene feste Nahrungsmittelmaterial Haustier-Trockennahrung mit einem Feuchtegehalt von weniger als 10 % umfasst.

2. Nahrungsmittelprodukt gemäß Anspruch 1, wobei der Stoff auf flüssiger Basis ferner wenigstens einen von einem funktionellen Inhaltsstoff und einem Organoleptikverbesserer umfasst.

3. Nahrungsmittelprodukt gemäß Anspruch 1, wobei der Stoff auf flüssiger Basis ausgewählt ist aus der Gruppe bestehend aus Öl und Wasser.

4. Nahrungsmittelprodukt gemäß Anspruch 1, wobei der Stoff auf flüssiger Basis eine Viskosität von 0,8 cp bis 2.000 cp aufweist.

5. Nahrungsmittelprodukt gemäß Anspruch 1, wobei das Verkapselungsmaterial ausgewählt ist aus der Gruppe bestehend aus einer hydrophilen Matrix, einer hydrophoben Matrix, Gelatine, einem mit zweiwertigen Kationen abgebundenen Alginat, einem Film auf Proteinbasis und einem Film auf Hydrokolloidbasis.

6. Nahrungsmittelprodukt gemäß Anspruch 1, wobei das Verkapselungsmaterial ausgewählt ist aus der Gruppe bestehend aus einem mit zweiwertigen Kationen abgebundenen Alginat, Paraffinwachs, Bienenwachs, Candelilla, Carnauba, Shellack, Tierfetten, Tapioka und Kombinationen davon.

7. Nahrungsmittelprodukt gemäß Anspruch 1, wobei der Stoff auf flüssiger Basis Wasser ist.

## Revendications

1. Produit alimentaire comprenant une pluralité de morceaux individuels, dans lequel chaque morceau comprend
a. une capsule comprenant un matériau d'encapsulation entourant une substance à base de liquide ; et
b. un revêtement comprenant une matière alimentaire solide sèche entourant au moins une partie du matériau d'encapsulation ; dans lequel le produit alimentaire est **caractérisé en ce que** :
chaque capsule est revêtue individuellement par la matière alimentaire solide sèche ; et
la matière alimentaire solide sèche comprend une croquette pour animal de compagnie ayant une teneur en humidité inférieure à 10 %.

2. Produit alimentaire selon la revendication 1, dans lequel la substance à base de liquide comprend en outre au moins un ingrédient fonctionnel et un activateur organoleptique.

3. Produit alimentaire selon la revendication 1, dans lequel la substance à base de liquide est sélectionnée dans le groupe constitué par l'huile et l'eau.

4. Produit alimentaire selon la revendication 1, dans lequel la substance à base de liquide a une viscosité allant de 0,8 cp à 2 000 cp.

5. Produit alimentaire selon la revendication 1, dans lequel le matériau d'encapsulation est sélectionné dans le groupe constitué par une matrice hydrophile, une matrice hydrophobe, une gélatine, un alginate lié à des cations divalents,, un film à base de protéines et un film d'hydrocolloïde.

6. Produit alimentaire selon la revendication 1, dans lequel le matériau d'encapsulation est sélectionné dans le groupe constitué par un ensemble de cations divalents, un alginate lié à des cations divalents, une cire de paraffine, une cire d'abeille, le candelilla, le carnauba, une gomme laque, des graisses animales, le tapioca et des combinaisons correspondantes.

7. Produit alimentaire selon la revendication 1, dans lequel la substance à base de liquide est de l'eau.
